# EUROPEAN PATENT APPLICATION

(11) **EP 4 459 718 A1**
(43) Date of publication of application: **06.11.2024**
(21) Application number: 21964973.8
(22) Date of filing: 31.12.2021
(51) Int. Cl.: H01M 4/62, H01M 4/36, H01M 10/0525

(54) **BINDER AND USE THEREOF**

(71) Applicant: Dongguan Amperex Technology Limited, Dongguan, Guangdong 523808 (CN)
(72) Inventor: CHU, Suchiao, Dongguan City, Guangdong Province 523000 (CN); CHENG, Baoxiao, Dongguan City, Guangdong Province 523000 (CN); YU, Lei, Dongguan City, Guangdong Province 523000 (CN); LI, Jiawen, Dongguan City, Guangdong Province 523000 (CN)
(74) Representative: Icosa
(86) International application number: PCT/CN2021/143979
(87) International publication number: WO 2023/123480

(57) **Abstract**

This application provides a binder and a negative electrode plate to which the binder is applied, an electrochemical device, and an electronic device. The binder includes a polyethyleneimine salt and a carboxylate salt polymer. The binder of this application can effectively release stress and maintain the integrity of a molecular network during expansion of particles of a negative active material, thereby exhibiting advantages of both high strength and high toughness, effectively reducing disruption of a bonding interface, and improving cycle performance of the electrochemical device.

## Description

### TECHNICAL FIELD

This application relates to the technical field of lithium-ion batteries, and in particular, to a binder and application thereof.

### BACKGROUND

As one of the next-generation negative electrode materials of lithium-ion batteries, a silicon material exhibits the advantages of a high specific capacity, low cost, and abundant reserves in nature. However, the volume expansion (approximately 300%) of the silicon material during charging, discharging, and storage has hindered the commercialization and wide application of the material. Unlike traditional carbon materials, the huge volume expansion of the silicon material tends to cause active material particles to rupture, cause the electrical network to break off, shorten the cycle life of the battery, increase the internal resistance, and in turn, cause the battery to fail rapidly. In order to bind silicon against excessive expansion, a high-modulus binder is generally used. However, the high-modulus binder is hard and brittle and lacks toughness. Once the expansion of the active material particles goes beyond the binding limit, the binder will be fragmented to disrupt the bonding interface.

### SUMMARY

To solve the problem that the expansion of a silicon material leads to fragmentation of a binder and disruption of a bonding interface, this application provides a new binder.

A first aspect of this application provides a binder. The binder includes a polyethyleneimine salt and a carboxylate salt polymer.

The applicant hereof finds that, due to a synergistic effect between the polyethyleneimine salt and the carboxylate salt polymer, the binder obtained by mixing the polyethyleneimine salt and the carboxylate salt polymer exhibits the advantage of both high strength and high toughness. During expansion of the particles (for example, a silicon material) bonded by the binder, the binder can release stress effectively, and maintain the integrity of the molecular network. When the particles expand beyond the binding limit, the binder can provide sufficient toughness to prevent fragmentation of the binder and disruption of the bonding interface.

In some embodiments, based on a total mass of the binder, a mass percent of the polyethyleneimine salt is 0.2% to 38%, and a mass percent of the carboxylate salt polymer is 62% to 99.8%. By controlling the mass percentages of the polyethyleneimine salt and the carboxylate salt polymer to fall within the above ranges, an amino cation of the polyethyleneimine and a carboxyl anion of the carboxylate salt are electrostatically bound to each other to construct a reversible crosslinked network, thereby effectively binding the negative active material. When the mass percent of the polyethyleneimine salt is higher than 38%, the flexibility of the binder increases, and the rigidity of the binder decreases, thereby resulting in a decrease in the modulus of the binder and a failure to bind the silicon particles. When the mass percent of the polyethyleneimine salt is lower than 0.2%, the number of amino cations decreases, and the electrostatic force between the amino cation and the carboxyl anion decreases, thereby leading to a decrease in the modulus of the binder.

In some embodiments, a mass ratio between the carboxylate salt polymer and the polyethyleneimine salt is (1.7 to 2.3): 1. When the mass ratio between the polyethyleneimine salt and the carboxylate salt polymer falls outside the above range, the number of amino cations of the polyethyleneimine salt and the number of the carboxylate anions of the carboxylate salt polymer are imbalanced, the intermolecular force is reduced, and the modulus of the formed binder is reduced. By controlling the mass ratio between the polyethyleneimine salt and the carboxylate salt polymer to fall within the above range, the number of amino cations is made equivalent to the number of carboxyl anions, and a crosslinked structure can be formed maximally between the groups. In this way, the formed binder exhibits a more distinct advantage of both high strength and high toughness. During expansion of the particles bonded by the binder, the binder can release stress more effectively, and maintain the integrity of the molecular network. When the particles expand beyond the binding limit, the binder can provide sufficient toughness to more effectively prevent the disruption of the bonding interface caused by the fragmentation of the binder.

In some embodiments, the polyethyleneimine salt includes at least one of a linear polyethyleneimine salt or a branched polyethyleneimine salt.

In some embodiments, the carboxylate salt polymer includes at least one of sodium polyacrylate, lithium polyacrylate, sodium carboxymethylcellulose, lithium carboxymethylcellulose, sodium hydroxypropyl carboxymethylcellulose, or lithium hydroxypropyl carboxymethylcellulose.

The applicant hereof finds that when a combination of the above types of polyethyleneimine salt and carboxylate salt polymer is used as a binder, a binder of a higher modulus and higher toughness can be obtained. Moreover, the above types of polyethyleneimine salt and carboxylate salt polymer are easily available and more commercially applicable.

In some embodiments, a weight-average molecular weight Mw₁ of the polyethyleneimine salt is 700 g/mol to 1×10⁵ g/mol, and a weight-average molecular weight Mw₂ of the carboxylate salt polymer is 3000 g/mol to 8×10⁶ g/mol. The weight-average molecular weights of the polyethyleneimine salt and carboxylate salt polymer directly affect the integrity and toughness of the crosslinked network. Without affecting the processability of the binder, controlling the weight-average molecular weights of the polyethyleneimine salt and the carboxylate salt polymer to fall within the above ranges is more conducive to obtaining a binder of a higher modulus and higher toughness, thereby more effectively preventing disruption of the bonding interface caused by the fragmentation of the binder.

In some embodiments, the binder exhibits at least one of the following features: a) a storage modulus of an adhesive film of the binder is 3 GPa to 20 GPa; b) a tensile break strength of an adhesive film of the binder is 40 MPa to 140 MPa; or c) a break elongation rate of an adhesive film of the binder is 5% to 40%. When the storage modulus of the adhesive film, the tensile break strength of the adhesive film, and the break elongation rate of the adhesive film of the binder are controlled to fall within the above ranges, a crosslinked molecular network is formed by the electrostatic crosslinking interaction between the amino cation and the carboxyl anion. In this way, the binder exhibits an advantage of both high strength and high toughness. During expansion of the particles bonded by the binder, the binder can release stress effectively, and maintain the integrity of the negative electrode plate. When the particles expand beyond the binding limit, the binder can provide sufficient toughness to prevent the disruption of the bonding interface caused by the fragmentation of the binder.

A second aspect of this application provides a negative electrode plate, including a negative current collector and a negative active material layer disposed on at least one surface of the negative current collector. The negative active material layer includes the binder provided in the first aspect of this application.

In some embodiments, based on a total mass of the negative active material layer, a mass percent of the binder is 1% to 10%. The binder added at an overly low mass percent lacks sufficient adhesiveness, and the binder added at an overly high mass percent reduces the energy density of the electrochemical device.

In some embodiments, a negative active material in the negative active material layer includes at least one of silicon, a silicon-carbon composite, or silicon suboxide. The above negative active material is conducive to increasing the specific capacity of the negative electrode. Further, when the negative active material is bonded by using the binder of this application, the resulting negative electrode plate not only exhibits a high capacity, but also effectively reduces the fragmentation of the binder and the disruption of the bonding interface. The electrochemical device that adopts the negative electrode plate achieves a longer cycle life.

In some embodiments, based on a total mass of the negative active material, a mass percent of silicon is 1% to 60%. When being less than 1%, the mass percent of silicon in the negative active material is not conducive to improving the cycle life and capacity of the electrochemical device. When the mass percent of silicon in the negative active material is higher than 60%, the expansion of the negative active material layer is overly large during cycling of the electrochemical device, and goes beyond the binding limit of the binder on the negative active material, thereby impairing the electrochemical performance such as the cycle life and capacity of the electrochemical device.

In some other embodiments, the negative active material may further include at least one of graphite or hard carbon. The graphite or hard carbon may be mixed with a silicon-containing negative active material at a specified ratio to serve as a composite negative electrode material.

In some embodiments, D₅₀ of the negative active material is 5 µm to 40 µm. When the D₅₀ of the negative active material is controlled to fall within the above range, the binder is highly effective in coating the negative active material. If the particle diameter of the negative active material is larger than 40 µm, the coating area of the binder for the negative active material is prone to be overly small, thereby impairing the bonding force for the negative electrode plate. In this application, "D₅₀" is a particle diameter value at which the cumulative volume percent reaches 50% in a volume-based particle size distribution curve of the sample particles. In a physical sense, the volume of the particles larger than this value accounts for 50% of the total volume of all sample particles, and the volume of the particles smaller than this value also accounts for 50% of the total volume. The particle diameter is measured with a laser particle size analyzer.

The negative active material layer of this application may further include a conductive agent. The type of the conductive agent in the negative electrode plate is not particularly limited herein. For example, the conductive agent may include at least one of conductive carbon black, carbon nanotubes, conductive graphite, graphene, acetylene black, or carbon nanofibers. The added conductive agent can improve the conductivity of the negative electrode plate. The mass percent of the conductive agent in the negative active material layer is not particularly limited herein, as long as the objectives of this application can be achieved. For example, the conductive agent accounts for 0% to 1% of the total mass of the negative active material layer.

The negative current collector is not particularly limited herein, and may be any negative current collector well-known in the art. For example, the negative current collector may be a copper foil, an aluminum foil, an aluminum alloy foil, a composite current collector, or the like. The thicknesses of the negative current collector and the negative active material layer are not particularly limited herein, as long as the objectives of this application can be achieved. For example, the thickness of the negative current collector is 6 µm to 10 µm, and the thickness of the negative active material layer is 30 µm to 120 µm.

In some embodiments, the negative electrode plate exhibits at least one of the following features: d) a compaction density of the negative active material layer is 1.45 g/cm³ to 1.85 g/cm³; e) a cohesive force of the negative active material layer is 20 N/m to 200 N/m; or f) a bonding force between the negative active material layer and the negative current collector is 10 N/m to 850 N/m. With the compaction density of the negative active material layer controlled to fall within the above range, the risk of fragmentation of the negative active material particles is reduced, thereby improving the interfacial stability of the negative active material layer. In addition, the contact between the negative active material particles is closer, thereby improving the electrical conductivity of the conductive network, and controlling the interfacial stability of the negative active material layer more effectively. In this way, the cycle performance of the electrochemical device that employs the negative electrode plate is improved. When the cohesive force of the negative active material layer is controlled to fall within the above range, the cohesive force of the negative electrode plate is high, thereby stabilizing the structure of the negative electrode plate, and improving the cycle performance of the electrochemical device that employs the negative electrode plate. When the bonding force between the negative active material layer and the negative current collector falls within the above range, the bonding force between the negative active material layer and the negative current collector is high, thereby improving the stability of the structure of the negative electrode plate, and improving the cycle performance of the electrochemical device that employs the negative electrode plate.

A third aspect of this application provides an electrochemical device. The electrochemical device includes the negative electrode plate provided in the second aspect of this application. The electrochemical device that employs the negative electrode plate of this application exhibits higher cycle performance.

In the electrochemical device provided in this application, the negative electrode plate is the negative electrode plate provided in this application; and other components such as a positive electrode plate, a separator, an electrolyte solution are not particularly limited.

For example, the positive electrode plate generally includes a positive current collector and a positive active material layer. The positive current collector is not particularly limited, and may be a positive current collector well known in the art. For example, the positive current collector may be a copper foil, an aluminum foil, an aluminum alloy foil, or a composite current collector. The positive active material layer includes a positive active material. The positive active material is not particularly limited, and may be a positive active material well known in the prior art. For example, the positive active material includes at least one of lithium nickel cobalt manganese oxide (811, 622, 523, 111), lithium nickel cobalt aluminum oxide, lithium iron phosphate, a lithium-rich manganese-based material, lithium cobaltate, lithium manganate, lithium manganese iron phosphate, or lithium titanium oxide. The thicknesses of the positive current collector and the positive active material layer are not particularly limited in this application, as long as the objectives of this application can be achieved. For example, the thickness of the positive current collector is 8 µm to 12 µm, and the thickness of the positive active material layer is 25 µm to 100 µm.

Optionally, the positive electrode plate may further include a conductive layer. The conductive layer is located between the positive current collector and the positive active material layer. The composition of the conductive layer is not particularly limited, and may be a conductive layer commonly used in the art. The conductive layer includes a conductive agent and a binder. The conductive agent is not particularly limited, and may be any conductive agents known to a person skilled in the art or a combination thereof. For example, the conductive agent may be at least one of a zero-dimensional conductive agent, a one-dimensional conductive agent, or a two-dimensional conductive agent. Preferably, the conductive agent may include at least one of carbon black, conductive graphite, carbon fiber, carbon nanotube, vapor grown carbon fiber (VGCF), or graphene. The dosage of the conductive agent is not particularly limited, and may be determined based on common knowledge in the art. One of the foregoing conductive agents may be used alone, or two or more of the conductive agents may be used together at any ratio.

The conductive layer binder in the conductive layer is not particularly limited, and may be any conductive layer binders well-known to a person skilled in the art or any combination thereof. For example, the conductive layer binder may be at least one of polyacrylate ester, polyimide, polyamide, polyamide imide, polyvinylidene difluoride, styrene-butadiene rubber, sodium alginate, polyvinyl alcohol, polytetrafluoroethylene, polyacrylonitrile, sodium carboxymethyl cellulose, lithium carboxymethyl cellulose, or the like. Such binders may be used alone, or two thereof may be used in combination at any ratio.

The separator in the electrochemical device in this application is configured to separate the positive electrode plate from the negative electrode plate to prevent an internal short circuit of the electrochemical device and allow free passage of electrolyte ions, so as to implement electrochemical charging and discharging processes. In this application, the separator is not particularly limited as long as the objectives of this application can be achieved. For example, the separator may be at least one of: a polyethylene (PE)- or polypropylene (PP)-based polyolefin (PO) separator, a polyester film (such as polyethylene terephthalate (PET) film), a cellulose film, a polyimide film (PI), a polyamide film (PA), a spandex film, an aramid film, a woven film, a non-woven film (non-woven fabric), a microporous film, a composite film, separator paper, a laminated film, or a spinning film. For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, polyimide, or the like. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and an inorganic compound layer binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The inorganic compound layer binder is not particularly limited, and may be at least one selected from polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer includes at least one of polyamide, polyacrylonitrile, acrylate polymer, polyacrylic acid, polyacrylate, polyvinylpyrrolidone, polyvinyl ether, polyvinylidene fluoride, poly(vinylidene difluoride-co-hexafluoropropylene), or the like.

The electrochemical device of this application further includes an electrolyte. The electrolyte may be at least one of a gel electrolyte, a solid-state electrolyte, and an electrolyte solution. The electrolyte solution includes a lithium salt and a nonaqueous solvent.

The lithium salt is not particularly limited herein. For example, the lithium salt is at least one selected from lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium methanesulfonate (LiCH₃SO₃), lithium trifluoromethanesulfonate (LiCF₃SO₃), lithium bis(trifluoromethanesulfonyl)imide (LiN(SO₂CF₃)₂), LiC(SO₂CF₃)₃, lithium hexafluorosilicate (LiSiF₆), lithium bis(oxalato)borate (LiBOB), or lithium difluoroborate (LiF₂OB). For example, the lithium salt may be LiPF₆ characterized by a high ionic conductivity and capability of improving cycle properties.

The nonaqueous solvent is not particularly limited herein. For example, the nonaqueous solvent may be at least one of a carbonate compound, a carboxylate compound, an ether compound, or another organic solvent. The carbonate compound may be at least one of a chain carbonate compound, a cyclic carbonate compound, or a fluorocarbonate compound. Examples of the chain carbonate compound are at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). Examples of the cyclic carbonate compound are at least one of ethylene carbonate (EC), propylene carbonate (PC), butylene carbonate (BC), or vinyl ethylene carbonate (VEC). Examples of the fluorocarbonate compound are at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. Examples of the carboxylate compound are at least one of methyl formate, methyl acetate, ethyl acetate, n-propyl acetate, tert-butyl acetate, methyl propionate, ethyl propionate, propyl propionate, γ-butyrolactone, decanolactone, valerolactone, mevalonolactone, or caprolactone. Examples of the ether compound are at least one of dibutyl ether, tetraglyme, diglyme, 1,2-dimethoxyethane, 1,2-diethoxyethane, ethoxy-methoxyethane, 2-methyltetrahydrofuran, or tetrahydrofuran. Examples of the other organic solvent are at least one of propyl propionate, dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or a phosphate ester. Based on the mass of the electrolyte solution, the total mass percent of the nonaqueous solvents is 5% to 90%, for example, 5%, 10%, 15%, 20%, 25%, 30%, 35%, 40%, 45%, 50%, 55%, 60%, 65%, 70%, 75%, 80%, 85%, 90%, or a value falling within a range formed by any two thereof.

The preparation process of the electrochemical device is well known to a person skilled in the art, and is not particularly limited in this application. For example, the preparation process of the electrochemical device may include: stacking a positive electrode plate and a negative electrode plate that are separated by a separator, performing operations such as winding or folding into an assembly as required, putting the assembly into the housing, injecting an electrolyte solution into the housing, and sealing the opening. In addition, an overcurrent prevention element, a guide plate, and the like may be placed into the housing as required, so as to prevent the rise of internal pressure, overcharge, and overdischarge of the electrochemical device.

A fourth aspect of this application provides an electronic device. The electronic device includes the electrochemical device provided in the third aspect of this application.

The electronic device is not particularly limited herein, and may be any electronic device known in the prior art. In some embodiments, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

In the binder of this application, an electrostatic crosslinked network formed by the amino cation in the polyethyleneimine salt and the carboxyl anion in the carboxylate salt polymer can effectively bind the particles against expansion during expansion of the particles of the negative active material, release stress, and maintain the integrity of the molecular network, thereby exhibiting advantages of both high strength and high toughness, and effectively reducing disruption of the bonding interface. When applied to an electrochemical device, the negative electrode plate containing the binder of this application improves the cycle performance of the electrochemical device. Further, the high-flexibility binder of this application also endows the negative electrode plate with processing advantages, and avoids processing problems such as overpressure, decarbonization, and edge material shedding during calendering, thereby improving the processability of the electrochemical device.

### BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below are merely a part of embodiments of this application.
FIG. 1 shows results of testing a storage modulus of an adhesive film of a binder of a negative electrode plate according to Embodiment 4 and Comparative Embodiment 1;
FIG. 2 shows a tensile strength-elongation rate curve of an adhesive film of a binder of a negative electrode plate according to Embodiment 4 and Comparative Embodiment 1;
FIG. 3 shows results of testing a bonding force between a negative active material layer and a negative current collector in a negative electrode plate according to Embodiment 4 and Comparative Embodiment 1;
FIG. 4 shows results of testing a cohesive force of a negative active material layer in a negative electrode plate according to Embodiment 4 and Comparative Embodiment 1;
FIG. 5 shows a capacity fading curve of a lithium-ion battery according to Embodiment 4 and Comparative Embodiment 1; and
FIG. 6 is a schematic diagram of intermolecular interaction of a binder according to this application.

### DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

The following describes this application in more detail with reference to embodiments. However, this application is not limited to such embodiments. It is hereby noted that in specific embodiments of this application, this application is construed by using a lithium-ion battery as an example of the electrochemical device, but the electrochemical device according to this application is not limited to the lithium-ion battery.

Unless otherwise expressly specified, reagents, materials, and instruments used in the following embodiments and comparative embodiments are all commercially available.

### Test methods

### Testing a storage modulus

The storage modulus is tested in a constant strain mode by using a TA dynamic thermomechanical analyzer DMA850.

Test procedure: Oven-drying a binder at 120 °C, making the binder into a 120 µm-thick adhesive film, cutting the adhesive film into a specimen of 8 mm (width) × 40 mm (length), and fixing the specimen between an upper jig and a lower jig of the dynamic thermomechanical analyzer along the length direction. Keeping the upper jig stationary, and applying a sinusoidally varying strain to the specimen by using the lower jig, so as to test a responsive sinusoidal stress of the specimen. Storage modulus = (stress/strain)cosδ. δ is a phase difference between the stress and the strain.

### Testing the elongation rate

The elongation rate is tested in a tensile mode by using a universal tensile tester.

Test procedure: Oven-drying a binder at 120 °C, making the binder into a 300 µm-thick adhesive film, cutting the adhesive film into a specimen of 1.5 cm (width) × 4 cm (length), and fixing the specimen between an upper jig and a lower jig of the universal tensile tester along the length direction, where an initial spacing between the upper jig and the lower jig is L₀. Keeping the lower jig stationary, stretching the upper jig at a constant speed of 50 mm/min until the specimen is fractured. At this time, the spacing between the upper jig and the lower jig is L₁. Calculating the break elongation rate as: break elongation rate = (L₁ - L₀)/L₀ × 100%; break strength = break tension/adhesive film cross-sectional area, where the adhesive film cross-sectional area is equal to adhesive film thickness × adhesive film width.

### Testing the bonding force

Oven-drying a negative electrode plate in a 60 °C oven for 15 h, cutting the electrode plate into strip-shaped specimens of 1.5 cm × 11 cm in size, and performing a 180 ° peel test on the specimens.

Test procedure: Affixing, by using a double-sided tape, the specimen of the negative electrode plate onto 3 cm × 15 cm steel sheet. Calendering the specimen for 7 times to 8 times by using a small stick. Performing a peel test on the specimen by using a tensile machine. Fixing the steel sheet in the lower jig of the tensile machine, bending the negative electrode plate by 180°, and letting the upper jig clamp the negative electrode plate. In a direction parallel to the negative electrode plate, peeling off the negative active material by a distance of 50 mm at a constant speed of 50 mm/min. Recording the stress and displacement data, and calculating the bonding force between the negative active material layer and the negative current collector as: bonding force = stress/displacement.

### Testing the cohesive force

Oven-drying a negative electrode plate in a 60 °C oven for 15 h, cutting the electrode plate into strip-shaped specimens of 1.5 cm × 11 cm in size, and performing a 180 ° peel test on the specimens.

Test procedure: Affixing the specimen cut out of the negative electrode plate onto 3 cm × 15 cm steel sheet by using a double-sided tape, and affixing a high-adhesion green adhesive tape onto the surface of the electrode plate specimen. Calendering the specimen for 7 times to 8 times by using a small stick. Fixing the steel sheet in the lower jig of the tensile machine, and letting the upper jig clamp the green adhesive tape. In a direction parallel to the negative electrode plate, peeling off the negative active material by a distance of 50 mm at a constant speed of 50 mm/min. Recording the stress and displacement data, and calculating the cohesive force of the negative active material layer as: cohesive force = stress/displacement.

### Testing the cycle capacity retention rate

Testing the cycle capacity retention rate of a lithium-ion battery: Charging the battery at 25 °C at a constant current of 0.5C until the voltage reaches a rated voltage, and then charging the battery at a constant voltage until the current drops to 0.025C, leaving the battery to stand for 5 minutes, and then discharging the battery at a current of 0.5C until the voltage reaches 3.0 V. Subjecting the battery to charge-discharge cycles in which the battery is charged at 0.5C and discharged at 0.5C by using the capacity obtained in this step as an initial capacity, and then comparing the capacity at the end of each cycle with the initial capacity to obtain a plurality of ratios between the cycle capacity and the initial capacity, and plotting a capacity fading curve by using the ratios.

### Embodiment 1

### <Preparing a positive electrode plate>

Dissolving lithium cobalt oxide as a positive active material, conductive carbon black as a conductive agent, and polyvinylidene difluoride (PVDF) as a binder at a mass ratio of 96.7: 1.7: 1.6 in an N-methyl-pyrrolidone (NMP) solution to form a positive electrode slurry in which the solid content is 75 wt%. Using a 10 µm-thick aluminum foil as a positive current collector. Applying the positive electrode slurry onto the positive current collector to a thickness of 50 µm. Drying the slurry to obtain a positive electrode plate coated with the positive active material on a single side. Subsequently, repeating the above steps on the other surface of the positive electrode plate, and cold-pressing the electrode plate to obtain a positive electrode plate coated with the positive active material on both sides.

### <Preparing a negative electrode plate>

Preparing a binder: Mixing the branched polyethyleneimine salt (Mw₁ = 1900 g/mol) and the lithium polyacrylate (Mw₂ = 5×10⁵ g/mol) at a mass ratio of 0.2: 99.8 (that is, the mass percent of the branched polyethyleneimine salt is 0.2%), and stirring well to form a binder ready for future use.

Mixing the negative active material (in which the mass percent of SiO/graphite is 10%, and the mass percent of silicon is 6.3%) with the binder at a mass ratio of 94: 6, adding the mixture into deionized water, and stirring well to form a negative electrode slurry in which the solid content is 50 wt%. Applying the negative electrode slurry onto one surface of a 10 µm-thick current collector copper foil to a thickness of 50 µm, so as to obtain a negative electrode plate coated with the negative active material layer on a single side. Subsequently, repeating the foregoing steps on the other surface of the negative electrode plate to obtain a negative electrode plate coated with the negative active material layer on both sides.

### <Preparing an electrolyte solution>

Mixing LiPF₆ and a nonaqueous solvent in an environment in which the water content is less than 10 ppm, where the mass ratio between the constituents of the nonaqueous solvent is: ethylene carbonate (EC): propylene carbonate (PC): propyl propionate: diethyl carbonate (DEC) = 1: 1: 1: 1, and the concentration of the LiPF₆ is 1.15 mol/L.

### <Preparing a lithium-ion battery>

Stacking the positive electrode plate, the separator, and the negative electrode plate sequentially, using a PE porous polymer film as a separator, placing the separator between the positive electrode and the negative electrode to serve a function of separation, and winding the stacked structure to obtain an electrode assembly. Putting the electrode assembly into an outer package housing, dehydrating the electrode assembly at 80 °C, and then injecting the electrolyte solution, and sealing the package. Performing steps such as chemical formation, degassing, and edge trimming to obtain a lithium-ion battery.

### Embodiments 2 to 5

Identical to Embodiment 1 except that the mass percent of the branched polyethyleneimine salt in the binder of the negative electrode plate is adjusted according to Table 1, and the mass percent of the lithium polyacrylate is changed accordingly.

### Embodiment 6

Identical to Embodiment 3 except that the branched polyethyleneimine salt in the binder of the negative electrode plate is replaced with a linear polyethyleneimine salt (Mw₁ = 2100 g/mol), and the lithium polyacrylate is replaced with sodium carboxymethyl cellulose (CAS No.: 9004-32-4).

### Embodiment 7

Identical to Embodiment 3 except that the branched polyethyleneimine salt in the binder of the negative electrode plate is replaced with a linear polyethyleneimine salt (Mw₁ = 2100 g/mol), and the lithium polyacrylate is replaced with sodium hydroxypropyl carboxymethyl cellulose (Mw₂ = 5 × 10⁵ g/mol).

### Embodiments 8 to 11

Identical to Embodiment 3 except that the mass percent of the binder in the negative active material layer is adjusted according to Table 1.

### Embodiments 12 to 15

Identical to Embodiment 3 except that the mass percent of silicon in the negative active material is adjusted according to Table 1.

### Embodiments 16 to 19

Identical to Embodiment 3 except that the particle diameter of the negative active material is adjusted according to Table 1.

### Embodiments 20 to 23

Identical to Embodiment 3 except that the compaction density of the negative active material layer is adjusted according to Table 1.

### Comparative Embodiment 1

Identical to Embodiment 1 except that the binder in the negative electrode plate is lithium polyacrylate.

### Comparative Embodiment 2

Identical to Embodiment 1 except that the binder in the negative electrode plate is lithium carboxymethyl cellulose.

### Comparative Embodiment 3

Identical to Embodiment 3 except that the binder of the negative electrode plate is 10 parts of ethyl 2-cyanoacrylate, 5 parts of cyanoethyl ethylenediamine, 3 parts of citric acid, 3 parts of polyethyleneimine, 17 parts of polyacrylate ester, 2 parts of titanate coupling agent, and 0.8 part of ammonium persulfate initiator.

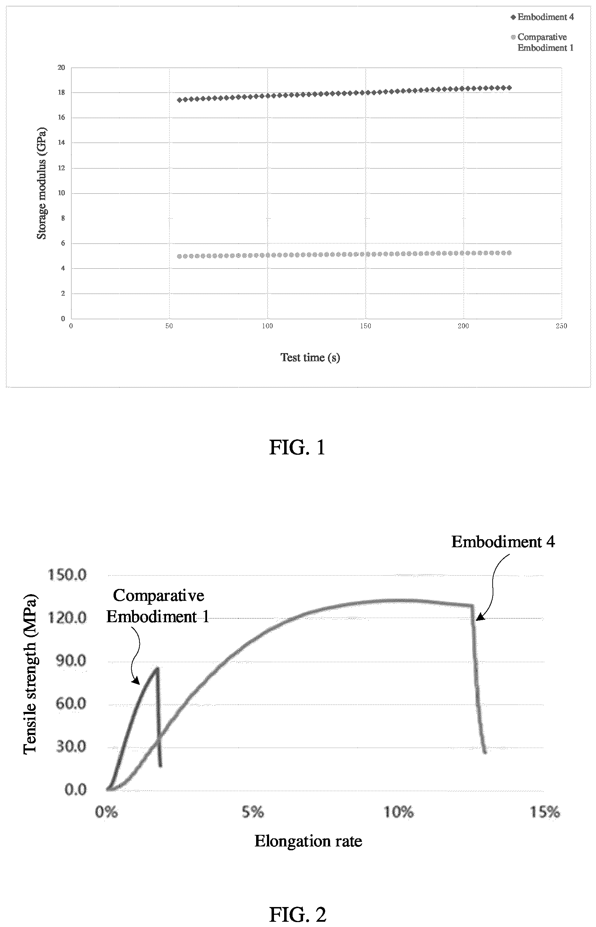

FIG. 1 shows results of testing a storage modulus of an adhesive film of a binder of a negative electrode plate and FIG. 2 shows results of testing a tensile strength and elongation rate of an adhesive film of the binder according to Embodiment 4 and Comparative Embodiment 1. As can be seen, in contrast to the lithium polyacrylate used as a binder, the storage modulus, break strength, and break elongation rate of the adhesive film of the binder of this application are increased significantly.

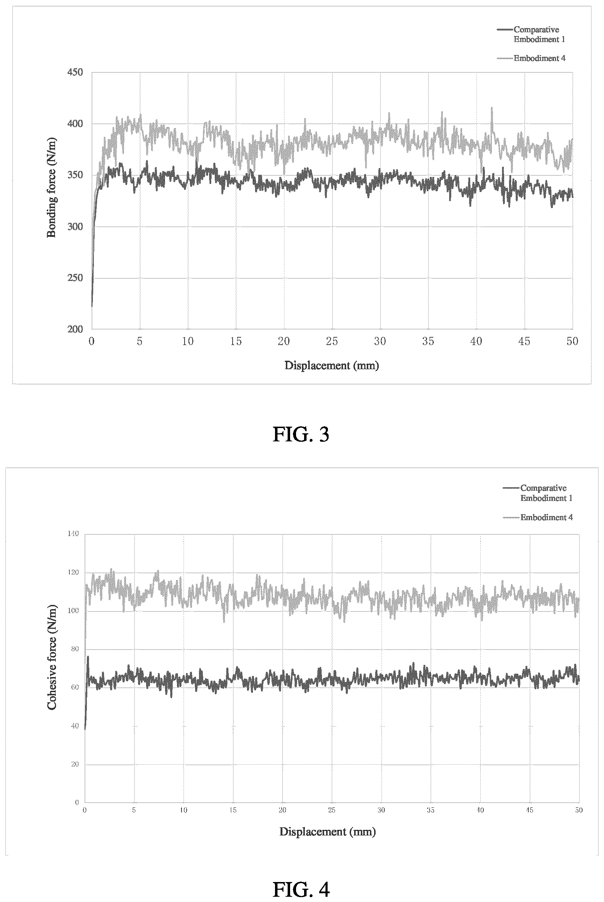

FIG. 3 shows results of testing a bonding force between a negative active material layer and a negative current collector and FIG. 4 shows results of testing a cohesive force of the negative active material layer in a negative electrode plate according to Embodiment 4 and Comparative Embodiment 1. As can be seen, in contrast to the negative electrode plate that uses lithium polyacrylate, a carboxylate salt polymer, as a binder, the bonding force and cohesive force of the negative electrode plate that employs the binder of this application are increased.

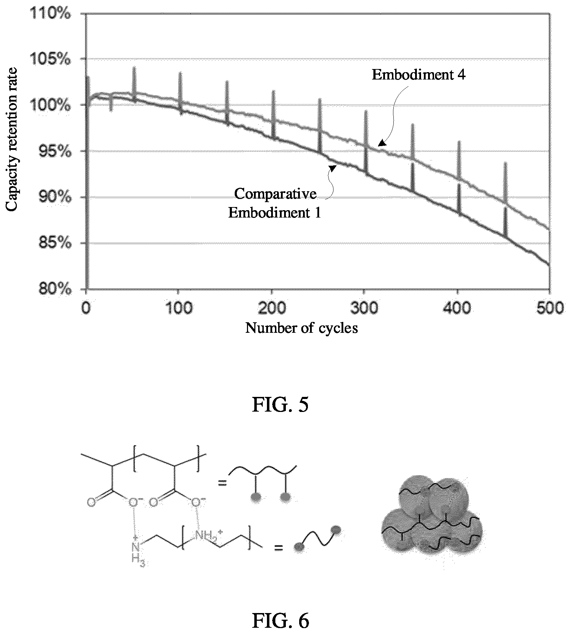

FIG. 5 shows a capacity fading curve of a lithium-ion battery according to Embodiment 4 and Comparative Embodiment 1. The results show that the lithium-ion battery employing the binder of this application exhibits a higher cycle capacity retention rate.

The preparation parameters and performance test results of each embodiment and each comparative embodiment are shown in Table 1 and Table 2.

**Table 1**

| | Polyethyleneimine salt | Carboxylate salt polymer | Mass percent of polyethylenei mine salt (%) | Mass percent of carboxylate salt polymer (%) | Percentage of binder in negative active material layer (%) | Mass percent of silicon in negative active material layer (%) | D₅₀ of negative active material (µm) | Compaction density of negative active material layer (g/cm³) |
|---|---|---|---|---|---|---|---|---|
| Embodiment 1 | Branched polyethyleneimine salt | Lithium polyacrylate | 0.2 | 99.8 | 6 | 6.3 | 10 | 1.75 |
| Embodiment 2 | Branched polyethyleneimine salt | Lithium polyacrylate | 10 | 90 | 6 | 6.3 | 10 | 1.75 |
| Embodiment 3 | Branched polyethyleneimine salt | Lithium polyacrylate | 15 | 85 | 6 | 6.3 | 10 | 1.75 |
| Embodiment 4 | Branched polyethyleneimine salt | Lithium polyacrylate | 25 | 75 | 6 | 6.3 | 10 | 1.75 |
| Embodiment 5 | Branched polyethyleneimine salt | Lithium polyacrylate | 38 | 62 | 6 | 6.3 | 10 | 1.75 |
| Embodiment 6 | Linear polyethyleneimine salt | Sodium carboxymethyl cellulose | 15 | 85 | 6 | 6.3 | 10 | 1.75 |
| Embodiment 7 | Linear polyethyleneimine salt | Sodium hydroxypropyl carboxymethyl cellulose | 15 | 85 | 6 | 6.3 | 10 | 1.75 |
| Embodiment 8 | Branched polyethyleneimine salt | Lithium polyacrylate | 15 | 85 | 1 | 6.3 | 10 | 1.75 |
| Embodiment 9 | Branched polyethyleneimine salt | Lithium polyacrylate | 15 | 85 | 3 | 6.3 | 10 | 1.75 |
| Embodiment 10 | Branched polyethyleneimine salt | Lithium polyacrylate | 15 | 85 | 9 | 6.3 | 10 | 1.75 |
| Embodiment 11 | Branched polyethyleneimine salt | Lithium polyacrylate | 15 | 85 | 10 | 6.3 | 10 | 1.75 |
| Embodiment 12 | Branched polyethyleneimine salt | Lithium polyacrylate | 15 | 85 | 6 | 3.1 | 10 | 1.75 |
| Embodiment 13 | Branched polyethyleneimine salt | Lithium polyacrylate | 15 | 85 | 6 | 15.7 | 10 | 1.75 |
| Embodiment 14 | Branched polyethyleneimine salt | Lithium polyacrylate | 15 | 85 | 6 | 28.3 | 10 | 1.75 |
| Embodiment 15 | Branched polyethyleneimine salt | Lithium polyacrylate | 15 | 85 | 6 | 37.8 | 10 | 1.75 |
| Embodiment 16 | Branched polyethyleneimine salt | Lithium polyacrylate | 15 | 85 | 6 | 6.3 | 5 | 1.75 |
| Embodiment 17 | Branched polyethyleneimine salt | Lithium polyacrylate | 15 | 85 | 6 | 6.3 | 20 | 1.75 |
| Embodiment 18 | Branched polyethyleneimine salt | Lithium polyacrylate | 15 | 85 | 6 | 6.3 | 30 | 1.75 |
| Embodiment 19 | Branched polyethyleneimine salt | Lithium polyacrylate | 15 | 85 | 6 | 6.3 | 40 | 1.75 |
| Embodiment 20 | Branched polyethyleneimine salt | Lithium polyacrylate | 15 | 85 | 6 | 6.3 | 10 | 1.45 |
| Embodiment 21 | Branched polyethyleneimine salt | Lithium polyacrylate | 15 | 85 | 6 | 6.3 | 10 | 1.55 |
| Embodiment 22 | Branched polyethyleneimine salt | Lithium polyacrylate | 15 | 85 | 6 | 6.3 | 10 | 1.65 |
| Embodiment 23 | Branched polyethyleneimine salt | Lithium polyacrylate | 15 | 85 | 6 | 6.3 | 10 | 1.85 |
| Comparative Embodiment 1 | / | Lithium polyacrylate | 0 | 100 | 6 | 6.3 | 10 | 1.75 |
| Comparative Embodiment 2 | / | Lithium carboxymethyl cellulose | 0 | 100 | 6 | 6.3 | 10 | 1.75 |
| Comparative Embodiment 3 | / | / | / | / | 6 | 6.3 | 10 | 1.75 |

| | | | | | | | | |
|---|---|---|---|---|---|---|---|---|
| Note: "/" in Table 1 indicates absence of the corresponding preparation parameter. | | | | | | | | |

**Table 2**

| | Storage modulus of adhesive film (GPa) | Break strength of adhesive film (MPa) | Break elongation rate of adhesive film (%) | Bonding force (N/m) | Cohesive force (N/m) | 400^{th}-cycle capacity retention rate (%) |
|---|---|---|---|---|---|---|
| Embodiment 1 | 7 | 86.0 | 8 | 360 | 72 | 90.1% |
| Embodiment 2 | 11 | 90.0 | 10 | 365 | 76 | 90.6% |
| Embodiment 3 | 16 | 110.0 | 14 | 380 | 95 | 91.3% |
| Embodiment 4 | 19 | 135.0 | 20 | 387 | 108 | 92.8% |
| Embodiment 5 | 18 | 130.4 | 36 | 393 | 110 | 92.5% |
| Embodiment 6 | 15 | 106.5 | 13 | 379 | 95 | 91.1% |
| Embodiment 7 | 14 | 102.3 | 11 | 377 | 95 | 91.0% |
| Embodiment 8 | 16 | 110.0 | 14 | 14 | 32 | 87.9% |
| Embodiment 9 | 16 | 110.0 | 14 | 62 | 53 | 88.7% |
| Embodiment 10 | 16 | 110.0 | 14 | 663 | 92 | 93.2% |
| Embodiment 11 | 16 | 110.0 | 14 | 819 | 110 | 94.6% |
| Embodiment 12 | 16 | 110.0 | 14 | 387 | 101 | 91.4% |
| Embodiment 13 | 16 | 110.0 | 14 | 376 | 90 | 89.7% |
| Embodiment 14 | 16 | 110.0 | 14 | 370 | 89 | 89.3% |
| Embodiment 15 | 16 | 110.0 | 14 | 365 | 83 | 88.5% |
| Embodiment 16 | 16 | 110.0 | 14 | 387 | 101 | 91.4% |
| Embodiment 17 | 16 | 110.0 | 14 | 369 | 89 | 90.8% |
| Embodiment 18 | 16 | 110.0 | 14 | 354 | 80 | 90.3% |
| Embodiment 19 | 16 | 110.0 | 14 | 342 | 77 | 89.1% |
| Embodiment 20 | 16 | 110.0 | 14 | 325 | 40 | 88.3% |
| Embodiment 21 | 16 | 110.0 | 14 | 343 | 53 | 89.1% |
| Embodiment 22 | 16 | 110.0 | 14 | 365 | 62 | 90.2% |
| Embodiment 23 | 16 | 110.0 | 14 | 388 | 82 | 91.6% |
| Comparative Embodiment 1 | 5 | 85.0 | 2 | 340 | 63 | 87.2% |
| Comparative Embodiment 2 | 6 | 80.0 | 3 | 351 | 69 | 87.5% |
| Comparative Embodiment 3 | 13 | 97 | 15 | 369 | 77 | 90.7% |

As can be seen from Embodiments 1 to 5 versus Comparative Embodiments 1 and 2, the storage modulus, break strength, and break elongation rate of the adhesive film of the binder are increased significantly by using the binder of this application and mixing the polyethyleneimine salt with the carboxylate salt polymer. Without being limited to any theory, the applicant hereof believes that some synergistic effect is exerted between the carboxylate salt polymer and the polyethyleneimine salt added at the mass percent and mass ratio specified herein. The synergistic effect increases the modulus of the resulting binder while increasing the toughness of the binder, and makes the binder of this application exhibit the advantages of both high strength and high toughness.

In addition, with the binder of this application, both the bonding force and cohesive force of the negative electrode plate are increased significantly, and the cycle capacity retention rate of the lithium-ion battery is increased significantly. Without being limited to any theory, the applicant hereof believes that amino cations exist in the polyethyleneimine salt, and carboxyl anions exist in the carboxylate salt polymer, thereby giving rise to intermolecular electrostatic interactions between the two types of molecules (the intermolecular interactions of the binder are shown in FIG. 6). During expansion of the negative active material particles, the binder can effectively release the stress and maintain the integrity of the molecular network, thereby effectively reducing disruption of the bonding interface, and improving the cycle performance of the lithium-ion battery.

As can be seen from Embodiment 6 and Embodiment 7, the binders containing different polyethyleneimine salts and carboxylate salt polymers of this application can increase the storage modulus, break elongation rate, and break strength. Accordingly, the bonding force and cohesive force of the negative active material layer of the negative electrode plate employing the binder as well as the cycle capacity retention rate of the lithium-ion battery are also increased.

As can be seen from Embodiment 3 versus Comparative Embodiment 3, the storage modulus, break elongation rate, and break strength of the binder containing the polyethyleneimine salt and the carboxylate salt polymer of this application are significantly higher than those of the existing binder containing polyethyleneimine and a polyacrylate ester.

As can be seen from Embodiments 8 to 11, with the increase of the mass percent of the binder in the negative active material layer, both the bonding force and cohesive force of the negative electrode plate are increased, and the cycle capacity retention rate of the lithium-ion battery is also improved. However, an overly high mass percent of the binder reduces the energy density of the battery. Therefore, in this application, the mass percent of the binder in the negative active material layer is preferably 1 wt% to 10 wt%.

As can be seen from Embodiments 12 to 15, with the increase of the mass percent of silicon in the negative active material, the bonding force and cohesive force of the negative electrode plate decrease, and the cycle performance of the lithium-ion battery also declines gradually. Without being limited to any theory, the applicant hereof believes that the increase in the silicon content intensifies the expansion of the negative active material, and in turn, reduces the bonding force and cohesive force of the negative electrode plate as well as the cycle performance of the lithium-ion battery. Therefore, in this application, based on the total mass of the negative active material, the mass percent of silicon is 1 % to 60%. It is hereby noted that when the silicon content reaches 60%, the cycle capacity retention rate of the lithium-ion battery in this application is still up to 88.5%, further indicating that the binder of this application is applicable to a silicon-containing negative active material.

As can be seen from Embodiments 16 to 19, with the increase of the particle diameter of the negative active material, the bonding force and cohesive force of the negative electrode plate decrease, and the cycle performance of the lithium-ion battery also declines. Without being limited to any theory, the applicant hereof believes that the increase in the particle diameter of the negative active material intensifies the expansion, and in turn, reduces the bonding force and cohesive force of the negative electrode plate as well as the cycle performance of the lithium-ion battery. In this application, when the particle diameter D₅₀ of the negative active material falls within the range of 10 µm to 40 µm, the cycle performance of the lithium-ion battery remains relatively high.

As can be seen from Embodiments 20 to 23, when the compaction density of the negative active material layer falls within the range of 1.45 g/cm³ to 1.85 g/cm³, the cycle performance of the lithium-ion battery remains relatively high.

What is described above is merely exemplary embodiments of this application, but is not intended to limit this application. Any modifications, equivalent replacements, improvements, and the like made without departing from the spirit and principles of this application still fall within the protection scope of this application.

## Claims

1. A binder, wherein the binder comprises a polyethyleneimine salt and a carboxylate salt polymer.

2. The binder according to claim 1, wherein, based on a total mass of the binder, a mass percent of the polyethyleneimine salt is 0.2% to 38%, and a mass percent of the carboxylate salt polymer is 62% to 99.8%.

3. The binder according to claim 1, wherein a mass ratio between the polyethyleneimine salt and the carboxylate salt polymer is (1.7 to 2.3): 1.

4. The binder according to claim 1, wherein the polyethyleneimine salt comprises at least one of a branched polyethyleneimine salt or a linear polyethyleneimine salt.

5. The binder according to claim 1, wherein the carboxylate salt polymer comprises at least one of sodium polyacrylate, lithium polyacrylate, sodium carboxymethylcellulose, lithium carboxymethylcellulose, sodium hydroxypropyl carboxymethylcellulose, or lithium hydroxypropyl carboxymethylcellulose.

6. The binder according to claim 1, wherein a weight-average molecular weight Mw₁ of the polyethyleneimine salt is 700 g/mol to 1×10⁵ g/mol, and a weight-average molecular weight Mw₂ of the carboxylate salt polymer is 3000 g/mol to 8×10⁶ g/mol.

7. The binder according to any one of claims 1 to 6, wherein the binder exhibits at least one of the following features:
a) a storage modulus of an adhesive film of the binder is 3 GPa to 20 GPa;
b) a tensile break strength of an adhesive film of the binder is 40 MPa to 140 MPa; or
c) a break elongation rate of an adhesive film of the binder is 5% to 40%.

8. A negative electrode plate, comprising a negative current collector and a negative active material layer disposed on at least one surface of the negative current collector, wherein the negative active material layer comprises the binder according to any one of claims 1 to 7.

9. The negative electrode plate according to claim 8, wherein, based on a total mass of the negative active material layer, a mass percent of the binder is 1% to 10%.

10. The negative electrode plate according to claim 8, wherein a negative active material in the negative active material layer comprises at least one of silicon, a silicon-carbon composite, or silicon suboxide.

11. The negative electrode plate according to claim 10, wherein, based on a total mass of the negative active material, a mass percent of silicon is 1% to 60%.

12. The negative electrode plate according to claim 10, wherein the negative active material further comprises at least one of graphite or hard carbon.

13. The negative electrode plate according to claim 10, wherein D₅₀ of the negative active material is 5 µm to 40 µm.

14. The negative electrode plate according to any one of claims 8 to 13, wherein the negative electrode plate exhibits at least one of the following features:
d) a compaction density of the negative active material layer is 1.45 g/cm³ to 1.85 g/cm³;
e) a cohesive force of the negative active material layer is 20 N/m to 200 N/m; or
f) a bonding force between the negative active material layer and the negative current collector is 10 N/m to 850 N/m.

15. An electrochemical device, comprising the negative electrode plate according to any one of claims 8 to 14.

16. An electronic device, comprising the electrochemical device according to claim 15.
